# EUROPEAN PATENT SPECIFICATION

(11) **EP 4 489 332 B1**
(45) Date of publication and mention of the grant of the patent: **28.01.2026**
(21) Application number: 23183942.4
(22) Date of filing: 06.07.2023
(51) Int. Cl.: H04J 3/06

(54) **MOBILE REFERENCE CLOCK SYSTEM, USE OF AN EPRTC AND SYN-CHRONIZATION METHOD**
MOBILES REFERENZTAKTSYSTEM, VERWENDUNG EINES EPRTC UND SYNCHRONISIERUNGSVERFAHREN
SYSTÈME D'HORLOGE DE RÉFÉRENCE MOBILE, UTILISATION D'UN EPRTC ET PROCÉDÉ DE SYNCHRONISATION DE SYN

(43) Date of publication of application: 08.01.2025
(73) Proprietor: Deutsche Telekom AG, 53113 Bonn (DE)
(72) Inventor: IMLAU, Helmut, 27299 Langwedel (DE)
(74) Representative: RDL Patentanwälte PartG mbB

(56) References cited:
- US-A1- 2022 026 857
- LEE COSART MICROCHIP USA: "Draft Revision to G.8272.1;WD8272.1LD", vol. 13/15, 9 February 2023 (2023-02-09), pages 1 - 20, XP044351540, Retrieved from the Internet <URL:https://www-api.itu.int/ifa/t/2022/sg15/exchange/wp3/q13/2023-02_E-Meeting/Editors-Rapporteurs%20Output%20Documents/WD8272.1LD-R2.docx> [retrieved on 20230209]
- VAKAS VYACHESLAV ET AL: "Synchronization Implementations for 5G Mobile Networks", 2022 IEEE 16TH INTERNATIONAL CONFERENCE ON ADVANCED TRENDS IN RADIOELECTRONICS, TELECOMMUNICATIONS AND COMPUTER ENGINEERING (TCSET), IEEE, 22 February 2022 (2022-02-22), pages 244 - 247, XP034119723, DOI: 10.1109/TCSET55632.2022.9766913
- HELMUT IMLAU DEUTSCHE TELEKOM GERMANY: "Primary Reference Clocks at ITU-T: Further Development towards cnPRTC;WD20", vol. 13/15, 27 September 2017 (2017-09-27), pages 1 - 7, XP044230413, Retrieved from the Internet <URL:https://www.itu.int/ifa/t/2017/sg15/exchange/wp3/q13/2017-10_Auckland/Input Documents/WD20-DT-NTT-CMCC-A1TelAustria_PrimaryReferenceClockDevelopment-at-SG15Q13.docx> [retrieved on 20170927]
- SCHWARTZ M L ET AL: "Perspective Equipment of Primary Reference Time and Clock for Synchronization Systems", 2022 SYSTEMS OF SIGNAL SYNCHRONIZATION, GENERATING AND PROCESSING IN TELECOMMUNICATIONS (SYNCHROINFO), IEEE, 29 June 2022 (2022-06-29), pages 1 - 6, XP034162163, DOI: 10.1109/SYNCHROINFO55067.2022.9840945
- RESILIENT PRIMARY CLOCK HELMUT IMLAU| ITSF: "Resilient Primary Clock concepts acc. to ITU-T with measurement results;WD13-21", vol. 13/15, 23 November 2022 (2022-11-23), pages 1 - 26, XP044342575, Retrieved from the Internet <URL:https://www-api.itu.int/ifa/t/2022/sg15/exchange/wp3/q13/2022-12-Stockholm/Input%20Documents/WD13-21_DT_Accompanying-Info_ITSF2022_PrimaryClockConcepts-with-measurementResults.pdf> [retrieved on 20221123]

## Description

The invention relates to a mobile reference clock system comprising a primary reference clock. The invention further relates to a use of an enhanced primary reference time clock, ePRTC, and a method for synchronizing a clock.

A mobile reference clock system is configured for being physically transferred and used for synchronizing a local clock not connected to a synchronization network. As such, the mobile reference clock system may also be called a travelling reference clock system.

Stationary reference clock systems form part of the state of the art. Exemplarily the following references are given.

US 2022/026857 A1 discloses a reference clock system comprising an ePRTC and an ePRC separate from the ePRTC.

The contribution "Resilient Primary Clock concepts acc. to ITU-T with measuring results; W13-21" by Helmut Imlau, published as XP044342575 on November 23, 2022 discloses a reference clock system with an ePRCT and a PRC separate from the ePRTC.

The contribution "Perspective Equipment of Primary Reference Time and Clock for Synchronization Systems" by Schwartz et al., published as XP034162163, DOI: 10.1109/SYNCHROINFO55067.2022.9840945 on June 29, 2022 discloses a reference clock system comprising an ePRC.

The contribution "Draft Revision to G.8272.1;WD8272.1LD" by Lee Cosart, published as XP044351540 on February 9, 2023, discloses an ePRTC for a reference clock system.

The contribution "Synchronization Implementations for 5G Mobile Networks" by Vakas Vyacheslav et al., published as XP03419723, DOI: 10.1109/TCSET55632.2022.976913 on February 22, 2022, discloses a reference clock system comprising a PRTC.

The contribution "Primary Reference Clocks at ITU-T: Further Development towards cnPRTC; WD20" by Helmut Imlau, published as XP034119723, DOI: 10.1109/TCSET55632.2022.9766913 on September 27, 2017, discloses a reference clock system with an ePRTC comprising an PRC.

The mobile reference clock system is connected to and synchronized with a master clock, e.g., a coordinated universal time, UTC(k), laboratory or a global navigation satellite system, GNSS, i.e., set to a master time provided by the master clock. Having been synchronized and separated from the master clock, the mobile reference clock system is transferred and connected to the local clock and synchronizes the local clock. However, the mobile reference clock system may vary, i.e. deviate from the master clock, during the transfer which results in an inaccurate synchronization of the local clock.

Known mobile reference clock systems comprise indeed atomic clocks, e.g., rubidium clocks or cesium clocks. A rubidium clock provides a frequency accuracy of Δf/f=10⁻⁹ resulting in a variation of 85 µs/day. A cesium clock provides a frequency accuracy of Δf/f=10⁻¹² resulting in a variation of 85 ns/day, i.e., the cesium clock is about a thousand times more accurate than the rubidium clock.

Due to the variation of the atomic clocks, the mobile reference clock systems may be used, however, within short time frames only. For instance, the rubidium clock may vary 50 ns after 50 s while the cesium clock may vary 50 ns only after 13,8 h which is slightly more than half a day and may not be sufficient for practical purposes.

It is, therefore, an object of the invention to provide a mobile reference clock system which allows for a substantially longer usage. Further objects of the invention are to suggest a use of an enhanced primary reference time clock, ePRTC, and a method for synchronizing a clock.

One aspect of the invention is a mobile reference clock system, comprising a primary reference clock, PRC. The primary reference clock may be an atomic clock.

According to the invention, the mobile reference clock system comprises an enhanced primary reference time clock, ePRTC, comprising the PRC. The ePRTC comprises a global navigation satellite system, GNSS, receiver and may comprise more than one PRC. The GNSS receiver is configured for receiving a GNSS signal providing a master time. The ePRTC is configured to be operated in an GNSS-locked mode when the GNSS receiver receives the GNSS signal. The ePRTC is configured to be operated in a holdover mode when the GNSS receiver does not receive any GNSS signal, i.e., during a GNSS outage. In the holdover mode, the ePRTC provides a higher frequency accuracy than the PRC on its own. The higher frequency accuracy allows the mobile reference clock system to be used substantially longer than the PRC alone.

According to the invention, the mobile reference clock system comprises a power supply connected to the ePRTC and configured for continuously providing the ePRTC, particularly the PRC of the ePRTC, with an electrical power. The power supply allows the ePRTC for running continuously during a transfer of the mobile reference clock system and during synchronizing a clock not connected to a synchronization network. In short, the power supply enables the mobile reference clock system to work during a time of usage.

The reference clock system may comprise a cesium clock or a rubidium clock as the PRC. Cesium clocks and rubidium clocks are accurate and available.

In an embodiment, the ePRTC is in conformity with international telecommunication union - telecommunication standardization section, ITU-T, recommendation G.8272.1. The recommendation G.8272.1 has been amended in August 2017 by Amendment Y.1367.1 for the last time.

In another embodiment, the PRC is in conformity with ITU-T recommendation G.811.1. The G.811.1 recommendation G.811.1 has been published in August 2017.

Still according to the invention, the mobile reference clock system comprises a rack supporting the ePRTC and a global navigation satellite system, GNSS, antenna connected to a GNSS receiver of the ePRTC. The rack allows for a compactness and, hence, a mobility of the mobile reference clock system. The GNSS antenna may be mounted on top of the rack.

Another object of the invention is a use of an enhanced primary reference time clock, ePRTC, for a mobile reference clock system. Traditionally, the ePRTC forms part of a synchronization network.

According to the invention, the ePRTC is used for a mobile reference clock system according to an embodiment of the invention. The ePRTC replaces a traditional PRC and provides a higher frequency accuracy than the traditional PRC, the higher frequency accuracy resulting in a longer time of usage of the mobile reference clock system.

A third aspect of the invention is a method for sychronizing a clock, wherein a frequency, a phase and/or a time of a clock is temporarily synchronized using a mobile reference clock system. The clock is separate from any synchronization network, i.e., not connected to a synchronization network The mobile reference clock system is connected to and synchronized with a master clock transferred and connected to the clock and synchronizes the clock.

According to the invention, a mobile reference clock system according to an embodiment of the invention is used. The mobile reference clock system is operated in a GNSS-locked mode when a GNSS signal providing a master time is available. In the GNSS-locked mode the mobile reference clock system receives the GNSS signal and is synchronized with the GNSS.

The ePRTC of the mobile reference clock system is preferably operated in a holdover mode for a holdover time during a GNSS outage. In the holdover mode the ePRTC does not receive any GNSS signal and controls a frequency accuracy on its own. The GNSS outage may be due to a malfunction or a shading of the GNSS.

The mobile reference clock system may be used within a holdover time in a range from 6 days up to 40 days. The ePRTC controls a variance during the range according to the ITU-T recommendations.

Advantageously, the mobile reference clock system is used after having been operated in a GNSS-locked mode for at least the holdover time. The GNSS-locked mode allows for lowering the variance substantially below a variance of a PRC alone. For a holdover time of 6 days the mobile reference clock system shall be operated in the GNSS-locked mode for at least 6 days. For a holdover time of 40 days the mobile reference clock system shall be operated in the GNSS-locked mode for at least 40 days.

In an embodiment, a time variance of the ePRTC linearly increases from 30 ns at the start of the holdover time up to 100 ns at 40 days after the start of the holdover time.

It is noted that the above-mentioned currently valid ITU-T recommendations require the variance of the ePRTC to be 100 ns at 14 days after the start of the holdover time. An amended version thereof will, however, require the variance of the ePRTC to be 100 ns only at 40 days after the start of the holdover time.

A limit of the variance linearly increases from ±30 ns up to ±100 ns, i.e., by 70 ns/40 days. This corresponds to a frequency accuracy of Δf/f =2 * 10⁻¹⁴ as compared to Δf/f=10⁻⁹ of a rubidium clock or Δf/f=10⁻¹² of a cesium clock. The frequency accuracy of the ePRTC results in a variance of 50 ns after about 29 days as compared to 50 s of a rubidium clock and 13,8 h of a cesium clock.

Preferably, a node of a cellular network is synchronized as the clock. A proper operation of the cellular network substantially depends on synchronized nodes.

Synchronizing may comprise setting a time of the clock, measuring a time delay of a link or generally comparing with a reference time. Synchronization shall be understood in a general manner, i.e., any measure requiring a high frequency accuracy. The measures comprise setting the clock, measuring a time delay of a link, i.e., a latency or a comparison with a reference time.

It is an essential advantage of the inventive mobile reference clock system that it provides a substantially higher accuracy than an atomic clock alone and, hence, allows for a substantially longer usage.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.

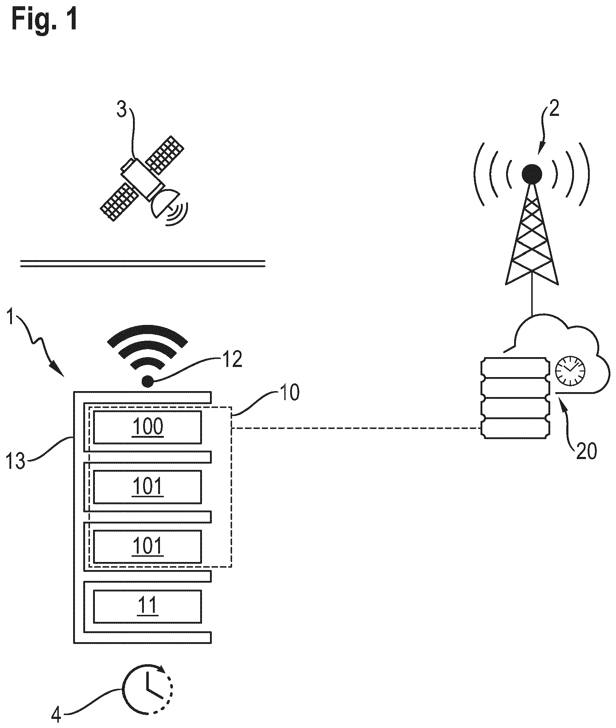

- Fig. 1: schematically shows a mobile reference clock system according to an embodiment of the invention.

Fig. 1 schematically shows a mobile reference clock system 1 according to an embodiment of the invention. The mobile reference clock system 1 comprises an enhanced primary reference time clock, ePRTC, 10. In other words, an ePRTC 10 is used for the mobile reference clock system 1.

The ePRTC 10 is preferably in conformity with international telecommunication union - telecommunication standardization section, ITU-T, recommendation G.8272.1.

The ePRTC 10 further comprises a GNSS receiver 100 and one or more than one primary reference clocks, PRC, 101. The mobile reference clock system 1 may particularly comprise a cesium clock or a rubidium clock as the PRC 101. The PRC 101 is preferably in conformity with ITU-T recommendation G.811.1.

The mobile reference clock system 1 further comprises a power supply 11 connected to the ePRTC 10 and configured for continuously providing the ePRTC 10 with an electrical power and/or a rack 13 supporting the ePRTC 10 and a global navigation satellite system, GNSS, antenna 12 connected to the GNSS receiver 100 of the ePRTC 10.

The mobile reference clock system 1 advantageously comprises a rack 13 supporting the ePRTC 10 and a global navigation satellite system, GNSS, antenna 12 connected to a GNSS receiver 100 of the ePRTC 10.

A clock 20 is synchronized in a method according to an embodiment of the invention as follows.

A frequency, a phase and/or a time of the clock 20 is temporarily synchronized using the mobile reference clock system 1. Synchronizing may comprise setting a time of the clock 20, measuring a time delay of a link or generally comparing with a reference time.

The ePRTC 10 of the mobile reference clock system 1 is preferably operated in a holdover mode for a holdover time 4 during a GNSS 3 outage.

Particularly, the mobile reference clock system 1 is used within a holdover time 4 in a range from 6 days up to 40 days. The mobile reference clock system 1 is preferably used after having been operated in a GNSS-locked mode for at least the holdover time 4.

A time variance of the ePRTC 10 may linearly increase from 30 ns at the start of the holdover time 4 up to 100 ns at 40 days after the start of the holdover time 4.

Preferably, a node of a cellular network 2 is synchronized as the clock 20.

### Reference Numerals

- 1: mobile reference clock system
- 10: ePRTC
- 100: GNSS receiver
- 101: PRC
- 11: power supply
- 12: GNSS antenna
- 13: rack
- 2: cellular network
- 20: clock
- 3: GNSS
- 4: holdover time

## Claims

1. A mobile reference clock system (1), comprising a primary reference clock, PRC, (101) wherein the mobile reference clock system (1) comprises an enhanced primary reference time clock, ePRTC, (10), the ePRTC (10) comprising the PRC (101), a global navigation satellite system, GNSS, receiver (100) and a GNSS antenna (12) connected to the GNSS receiver (100), wherein a power supply (11) is connected to the ePRTC (10) and configured for continuously providing the ePRTC (10) with an electrical power while the mobile reference clock system is physically transferred and a rack (13) is supporting the ePRTC (10) and the GNSS antenna (12).

2. The mobile reference clock system according to claim 1, wherein the reference clock system (1) comprises a cesium clock or a rubidium clock as the PRC (101).

3. The mobile reference clock system according to one of claims 1 to 2, wherein the ePRTC (10) is in conformity with international telecommunication union - telecommunication standardization section, ITU-T, recommendation G.8272.1 as amended in August 2017 by amendment Y.1367.1.

4. The mobile reference clock system according to one of claims 1 to 3, wherein the PRC (101) is in conformity with ITU-T recommendation G.811.1 published in August 2017.

5. A method for sychronizing a clock (20), wherein a frequency, a phase and/or a time of a clock (20) is temporarily synchronized using a mobile reference clock system (1) according to one of claims 1 to 4.

6. The method according to claim 5, wherein the ePRTC (10) of the mobile reference clock system (1) is operated in a holdover mode for a holdover time (4) during a GNSS (3) outage.

7. The method according to claim 6, wherein the mobile reference clock system (1) is used within a holdover time (4) in a range from 6 days up to 14 days.

8. The method according to claim 6 or 7, wherein the mobile reference clock system (1) is used after having been operated in a GNSS-locked mode for at least the holdover time (4).

9. The method according to one of claims 5 to 8, wherein a time variance of the ePRTC (10) linearly increases from 30 ns at the start of the holdover time (4) up to 100 ns at 14 days after the start of the holdover time (4).

10. The method according to one of claims 5 to 9, wherein a node of a cellular network (2) is synchronized as the clock (20).

11. The method according to one of claims 5 to 10, wherein synchonizing comprises setting a time of the clock (20), measuring a time delay of a link or generally comparing with a reference time.

## Patentansprüche

1. Mobiles Referenztaktsystem (1), umfassend einen primären Referenztaktgeber, PRC, (101), wobei das mobile Referenztaktsystem (1) einen erweiterten primären Referenzzeittaktgeber, ePRTC, (10), umfasst, wobei der ePRTC (10) den PRC (101), einen globalen Satellitennavigationssystem, GNSS, - Empfänger (100) und eine GNSS-Antenne (12), die mit dem GNSS-Empfänger (100) verbunden ist, umfasst, wobei eine Energieversorgung (11) mit dem ePRTC (10) verbunden ist und zur kontinuierlichen Versorgung des ePRTC (10) mit elektrischem Strom konfiguriert ist, während das mobile Referenztaktsystem physisch transferiert wird und ein Gestell (13) den ePRTC (10) und die GNSS-Antenne (12) trägt.

2. Mobiles Referenztaktsystem nach Anspruch 1, wobei das Referenztaktsystem (1) eine Cäsium-Uhr oder eine Rubidium-Uhr als den PRC (101) umfasst.

3. Mobiles Referenztaktsystem nach einem der Ansprüche 1 bis 2, wobei der ePRTC (10) mit der Internationalen Fernmeldeunion - Sektor für Telekommunikationsstandardisierung , ITU-T, Empfehlung G.8272.1 in der durch Änderung Y.1367.1 geänderten Fassung von August 2017 übereinstimmt.

4. Mobiles Referenztaktsystem nach einem der Ansprüche 1 bis 3, wobei der PRC (101) mit der im August 2017 veröffentlichten ITU-T-Empfehlung G.811.1 übereinstimmt.

5. Verfahren zur Synchronisierung eines Takts (20), wobei eine Frequenz, eine Phase und/oder eine Zeit eines Taktgebers (20) unter Verwendung eines mobilen Referenztaktsystems (1) nach einem der Ansprüche 1 bis 4 zeitweise synchronisiert wird.

6. Verfahren nach Anspruch 5, wobei der ePRTC (10) des mobilen Referenztaktsystems (1) während eines GNSS (3)-Ausfalls für eine Holdover-Zeit (4) in einem Holdover-Modus betrieben wird.

7. Verfahren nach Anspruch 6, wobei das mobile Referenztaktsystem (1) innerhalb einer Holdover-Zeit (4) in einem Bereich von 6 Tagen bis zu 14 Tagen verwendet wird.

8. Verfahren nach Anspruch 6 oder 7, wobei das mobile Referenztaktsystem (1) verwendet wird, nachdem es mindestens während der Holdover-Zeit (4) in einem GNSS-gesperrten Modus betrieben wurde.

9. Verfahren nach einem der Ansprüche 5 bis 8, wobei eine zeitliche Abweichung des ePRTC (10) von 30 ns zu Beginn der Holdover-Zeit (4) bis zu 100 ns 14 Tage nach Beginn der Holdover-Zeit (4) linear ansteigt.

10. Verfahren nach einem der Ansprüche 5 bis 9, wobei ein Knoten eines Mobilfunknetzwerks (2) als Taktgeber (20) synchronisiert ist.

11. Verfahren nach einem der Ansprüche 5 bis 10, wobei die Synchronisierung das Einstellen einer Zeit des Taktgebers (20), das Messen einer Zeitverzögerung eines Links oder allgemein das Vergleichen mit einer Referenzzeit umfasst.

## Revendications

1. Système d'horloge de référence mobile (1), comprenant une horloge de référence primaire, PRC, (101), le système d'horloge de référence mobile (1) comprenant une horloge de référence primaire améliorée, ePRTC, (10), l'ePRTC (10) comprenant la PRC (101), un récepteur de système mondial de navigation par satellite, GNSS, (100) et une antenne GNSS (12) connectée au récepteur GNSS (100), une source de courant (11) étant connectée à l'ePRTC (10) et configurée pour fournir en continu à l'ePRTC (10) une alimentation électrique pendant que le système d'horloge de référence mobile est transféré physiquement et un support (13) soutient l'ePRTC (10) et l'antenne GNSS (12).

2. Système d'horloge de référence mobile selon la revendication 1, le système d'horloge de référence (1) comprenant une horloge au césium ou une horloge au rubidium en tant que la PRC (101).

3. Système d'horloge de référence mobile selon l'une des revendications 1 à 2, l'ePRTC (10) étant conforme à la recommandation G.8272.1 de l'Union internationale des télécommunications - Section de normalisation des télécommunications, UIT-T, telle que modifiée en août 2017 par l'amendement Y.1367.1

4. Système d'horloge de référence mobile selon l'une des revendications 1 à 3, la PRC (101) étant conforme à la recommandation G.811.1 de l'UIT-T publiée en août 2017.

5. Procédé de synchronisation d'une horloge (20), une fréquence, une phase et/ou un temps d'une horloge (20) étant temporairement synchronisés à l'aide d'un système d'horloge de référence mobile (1) selon l'une des revendications 1 à 4.

6. Procédé selon la revendication 5, l'ePRTC (10) du système d'horloge de référence mobile (1) fonctionnant pendant une panne du GNSS (3) en mode de maintien pendant un temps de maintien (4).

7. Procédé selon la revendication 6, le système d'horloge de référence mobile (1) étant utilisé pendant un temps de maintien (4) compris entre 6 et 14 jours.

8. Procédé selon la revendication 6 ou 7, le système d'horloge de référence mobile (1) étant utilisé après avoir fonctionné en mode de verrouillage du GNSS pendant au moins le temps de maintien (4).

9. Procédé selon l'une des revendications 5 à 8, une variance temporelle de l'ePRTC (10) augmentant linéairement de 30 ns au début du temps de maintien (4) jusqu'à 100 ns au bout de 14 jours après le début du temps de maintien (4).

10. Procédé selon l'une des revendications 5 à 9, un nœud d'un réseau cellulaire (2) étant synchronisé en tant qu'horloge (20).

11. Procédé selon l'une des revendications 5 à 10, la synchronisation comprenant le réglage d'une heure de l'horloge (20), la mesure d'un retard d'une liaison ou, de manière générale, la comparaison avec une heure de référence.
